(19) Europäisches Patentamt
European Patent Office
Office européen des brevets

(11) Publication number: **0 069 792 B2**

(12) # NEW EUROPEAN PATENT SPECIFICATION

(45) Date of publication of the new patent specification: **23.11.94**

(51) Int. Cl.5: **C08F 287/00**, //(C08F287/00, 212:00)

(21) Application number: **81105454.3**

(22) Date of filing: **13.07.81**

(54) **Transparent impact resin and process for the preparation thereof.**

(43) Date of publication of application:
**19.01.83 Bulletin 83/03**

(45) Publication of the grant of the patent:
**21.09.88 Bulletin 88/38**

(45) Mention of the opposition decision:
**23.11.94 Bulletin 94/47**

(84) Designated Contracting States:
**BE DE FR GB IT NL**

(56) References cited:
**EP-A- 0 021 488**
**FR-A- 1 438 700**
**FR-A- 1 492 011**
**FR-A- 2 348 234**
**GB-A- 1 031 496**
**GB-A- 1 536 537**

(73) Proprietor: **THE DOW CHEMICAL COMPANY**
**2030 Dow Center**
**Abbott Road**
**P.O. Box 1967**
**Midland Michigan 48640-1967 (US)**

(72) Inventor: **Lyons, Charles Edward**
**2300 Bayliss Street**
**Midland Michigan (US)**
Inventor: **Tung, Lu Ho**
**401 Hunters Ridge**
**Midland Michigan 48640 (US)**

(74) Representative: **Hann, Michael, Dr. et al**
**Patentanwälte Dr. Michael Hann**
**Dr. H.-G. Sternagel**
**Sander Aue 30**
**D-51465 Bergisch Gladbach (DE)**

EP 0 069 792 B2

## Description

Transparent impact resistant styrene containing polymers are highly desirable for many applications, particularly in the field of packaging, and are suitable for such applications as tub and cup lids, blister packs and the like. Polystyrene is much too brittle for many applications and impact polystyrene does not have sufficient transparency for many of such packaging applications. Impact resistant transparent resins have been prepared by a variety of methods employing anionic polymerization with butyllithium as initiator. Other techniques have employed methylmethacrylate in the styrene polymer to prepare impact resistant resins wherein the rubber domains would not significantly interfere with the transmission of light.

It is the technological problem of the invention to provide an improved impact resistant transparent styrenic resin which does not require anionic polymerization and its attendant purity problems.

This problem is solved by providing an impact resistant alkenyl aromatic resinous composition in the form of a matrix of a polyalkenyl aromatic monomer having therein a block copolymer, said resinous composition being obtained by free radical polymerization of the alkenyl aromatic monomer in the presence of the block copolymer, the block copolymer having a weight average molecular weight of at least 40 000 and having the AB or $AB(BA)_n$—configuration, wherein A represents a block of polymerized alkenyl aromatic monomer and B represents a block of polymerized conjugated diene monomer and n is an integer from 1 to 5, characterized in that,

a) the composition is transparent and contains from 70 to 85 weight percent of alkenyl aromatic units and from 30 to 15 weight percent of conjugated diene units polymerized therein,

b) the weight average molecular weight of the polyalkenyl aromatic monomer matrix lies in the range of from 75 000 to 350 000,

c) the block copolymer is contained in the matrix as a plurality of domains in the form of rods and spheres having diameters less than 70 nanometers and no occlusions being observable by electron microscopy,

d1) the block copolymer contains from 39 to 70 weight percent of polymerized alkenyl aromatic monomer and from 61 to 30 weight percent of polymerized butadiene therein or

d2) the block copolymer contains from 35 to 50 weight percent of polymerized alkenyl aromatic monomer and from 65 to 50 weight percent of polymerized isoprene, which optionally can be partially replaced by butadiene, and

e) when the block copolymer used is a copolymer comprising butadiene, the block copolymer having a weight average molecular weight from 40,000 to 150,000, crosslinking between the polymerized diene blocks has been prevented by addition of an antioxidant at or near the end of the polymerisation.

Also within the scope of the invention is a method for the preparation of an impact resistant alkenyl aromatic resinous composition by the free radical polymerisation of at least one alkenyl aromatic monomer in the presence of a block copolymer and forming a matrix of polyalkenyl aromatic monomer having therein the block copolymer having a weight average molecular weight of at least 40000 and having the AB or AB-$(BA)_n$ configuration, wherein A represents a block of polymerized alkenyl aromatic monomer and B represents a block of polymerized conjugated diene monomer and n is an integer from 1 to 5, characterized by forming a transparent composition containing from 70 to 85 weight percent of alkenyl aromatic unit and from 30 to 15 weight percent of conjugated diene units polymerized therein, providing a weight average molecular weight of the polyalkenyl aromatic monomer matrix of from 75 000 to 350 000 having therein the block copolymer as a plurality of domains in the form of rods and spheres having diameters less than 70 nano-meters and no occlusions of polymerized alkenyl aromatic monomers being observable by electron microscopy and i) the block copolymer having a weight average molecular weight from 40,000 to 150,000, containing from 39 to 70 weight percent of polymerized alkenyl aromatic monomer and from 80 to 30 weight percent of polybutadiene therein or ii) the block copolymer contains from 35 to 50 weight percent of polymerized alkenyl aromatic monomer and from 65 to 50 weight percent of polymerized isoprene, which optionally can be partially replaced by butadiene, and when a block copolymer comprising butadiene is used, preventing crosslinking between the polymerized diene blocks by adding an antioxidant at or near the end of the polymerization.

When a polybutadiene block copolymer is used, the molecular weight of the block copolymer is from 40,000 to 150,000.

By an alkenyl aromatic monomer is meant an alkenyl aromatic compound having the general formula:

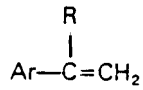

wherein "Ar" represents an aromatic hydrocarbon radical, or an aromatic halohydrocarbon radical of the benzene series, and "R" is hydrogen or the methyl radical. Examples of such alkenyl aromatic monomers are styrene, ortho-methylstyrene, meta-methyl-styrene, para-methyl-styrene, ar-ethylstyrene, ar-vinylxylene or mixtures thereof.

The preferred block copolymers to be used for the practice of the invention are block copolymers of alkenyl aromatic monomer and diene of the AB or $AB(BA)_n$ configuration wherein A represents a block of polymerized alkenyl aromatic monomer and B is a block of polymerized conjugated diene such as polybutadiene, polyisoprene or copolymers of butadiene and isoprene and n is an integer of from 1 to 5. Preferably n is one. The proportion of alkenyl aromatic monomer should be from 20 to 70, preferred from 39 to 70 weight percent and the proportion of diene from 61 to 30 weight percent with the further limitation that the weight average molecular weight is above 40,000 as determined by gel permeation chromatography and up to a molecular weight wherein the desired morphology is not obtained. Mixtures of butadiene and isoprene are also useful as the B block.

Polymers in accordance with the present invention are believed to be a mixture of a variety of components. The matrix is principally polyalkenyl aromatic monomer having a weight average molecular weight as determined by gel permeation chromatography of from 75,000 to 350,000. It is believed some graft copolymer exists wherein the alkenyl aromatic monomer has grafted onto the blocked copolymer.

The free-radical initiator may be any of those known in the art such as, for example, 4 - (t - Butyl) - 1,1 - bis(t - butylperoxy) cyclohexane, benzoyl peroxide, and lauroyl peroxide. Generally, the amount of initiator employed is in a range of 0.025 to 0.2 weight percent based on the combined weight of the monomer plus block copolymer.

Oftentimes, and particularly when the diene polymer is polybutadiene, it is desirable to employ a chain transfer agent to help maintain the molecular weight of the polymer in a desirable range. Suitable chain transfer agents include organic thiols such as aliphatic mercaptans typically dodecyl mercaptan, halogenated hydrocarbons such as carbon tetrachloride or alphamethylstyrene dimer. Such chain transfer agents when added are generally in a concentration of from 0.001 to 0.5 weight percent based on the combined weight of monomer plus block copolymer. Similarly, when the diene is polybutadiene, antioxidant is added at or near the end of the polymerization to prevent crosslinking between the diene polymer blocks. Such antioxidants are well known to those skilled in the art and include hindered phenols such as 2,6 - di - (tertiarybutyl) - 4 - methylphenol and combinations of hindered phenols and alkylated aryl phosphites.

Generally, polymers in accordance with the present invention are prepared by polymerization in mass, solution or suspension at temperatures ranging from 105° to 175°C. If desired, inert solvents may be incorporated prior to polymerization in order to reduce the viscosity of the reaction mixture. Typical solvents include benzene, toluene, xylene, ethylbenzene, cyclohexane and methylcyclohexane. On completion of the polymerization step, such solvents are generally removed from the polymer by exposing molten polymer to reduced pressure such as from 0.14 to 136 mbar (0.1 to 100 millimeters of mercury) until the solvents and residual monomer have been removed from the polymer. The resultant polymer compositions are moldable, i.e., they may be directly heat fabricated into a desired form such as sheet or film, or extruded as strands, the strands being cooled and cut into pellets.

The invention is further illustrated by the following examples, wherein all parts and percentages are by weight unless otherwise specified.

Example 1

An agitated pressure reactor was charged with 115 grams of a styrene-butadiene block copolymer dissolved in 334 grams of styrene, 121 grams of ethylbenzene. The block copolymer had a weight average molecular weight of 90,000 as determined by gel permeation chromatography and contained 45 weight percent styrene and 55 weight percent butadiene. One and one-tenth grams of alphamethylstyrene dimer was employed as a chain transfer agent together with 1.7 grams of mineral oil as a lubricant and 0.24 grams of 4 - (tertiaryburyl) - 1,1 - bis - (tertiarybutylperoxy)cyclohexane as free radical initiator. The

resultant reaction mixture was heated to 105° and agitated, by an agitator rotating at about 30 revolutions per minute. Over a period of 5—1/2 hours the temperature of the reaction mixture was increased from 105 to 155°C. At this time, 2.8 grams of 2,6 - di - (tert - butyl) - 4 - methylphenol and 1.8 grams of trisnonylphenyl phosphite were added as antioxidants. When the antioxidants had been dispersed in the reaction mixture, the reaction mixture was placed in trays and heated in a vacuum oven at 175° for one and one-half hours under a pressure of 27 mbar (20 millimeters of mercury) to remove ethylbenzene and unreacted styrene. The resulting polymer product contained about 19 weight percent polymerized butadiene units therein. The resultant polymer was ground and test bars compression molded therefrom. The following results were obtained: Notched Izod impact (0.38 ft-lbs/inch notch) 2.02 kg/cm; tensile strength at rupture, (3375 pounds per square inch) 23,270 kPa; tensile modulus 248,000 pounds per square inch (17.09,91 $\times 10^3$ kPa); Vicat heat distortion temperature 97.2°C; and melt flow rate using condition G of 1.71 grams.

A 10 mil (0.254 mm) thick sheet was molded from the polymer and examined for light absorbence in a Beckman Model B spectrophotometer. The wave length employed was 640 nanometers and the film was placed about 9 centimeters from the center of the photocell light detector. The light absorbency was 0.07. An electron micrograph of sections of the molded specimen showed polybutadiene domains having the shapes of rods and spheres of about 35 nonometers in diameter and no visible occluded polystyrene.

Example 2

In a manner similar to Example 1, a plurality of polymerizations were conducted by utilizing a variety of styrene-butadiene block copolymers. The results are set forth in Table I wherein product composition S/B indicates the weight ratio of styrene to butadiene units in the final product. Under the heading of Elastomer S/B comp. is the weight proportion of styrene to butadiene in the block copolymer and $\overline{M}w$ is its weight average molecular weight in gram moles; n. Izod impact is the notched Izod impact; H. D. indicates heat distortion in degrees Centigrade; nm, nanometers; MFR Sch. G., melt flow rate, schedule G.

0 069 792

comparative examples

TABLE I

| Product Comp. S/B | Elastomer S/B Comp. | Elastomer Mw | n. Izod imp. kg/cm (Ft.-lbs./in.-Notch) | Rupture kPa (psi) | Modulus kPa×10$^{-3}$ (psi) | Vicat H.D. (°C) | Absorbance (10 mils (0.254 mm) at 640 nm) | MFR (Sch. G.) | Polybutadiene domain shape and dia. sizes |
|---|---|---|---|---|---|---|---|---|---|
| 80/20 | 27/73 | 113,000 | 2.99 (0.56) | 15,424 (2,237) | 1,489.28 (216,000) | 100 | 0.16 | 0.89 | rods & core & shell |
| 82/18 | 39/61 | 169,000 | 2.72 (0.51) | 20,678 (2,999) | 1,840.91 (267,000) | 98.9 | 0.14 | 0.31 | rods & core & shell |
| 78/22 | 39/61 | 73,000 | 2.93 (0.55) | 13,362 (1,938) | 1,213.48 (176,000) | 97.2 | 0.09 | 4.66 | rods & spheres, 30 nm. |
| 79/21 | 42/58 | 98,000 | 2.29 (0.43) | 17,651 (2,560) | 1,558.22 (226,000) | 92.1 | 0.08 | 2.60 | rods & spheres, 35 nm. |
| 83/17 | 47/53 | 82,000 | 1.81 (0.34) | 22,153 (3,213) | 1,792.65 (260,000) | 100 | 0.07 | 2.02 | rods & spheres, 35 nm. |
| 81/19 | 55/45 | 105,000 | 4.53 (0.85) | 26,193 (3,799) | 1,799.54 (261,000) | 98.9 | 0.06 | 1.70 | rods & spheres, 30 nm. |
| 80/20 | 60/40 | 132,000 | 2.34 (0.44) | 17,127 (2,484) | 1,482.38 (215,000) | 100 | 0.06 | 2.14 | rods & spheres, 40 nm. |

All polymerizations were made using 500 ppm (based on styrene plus elastomer) of 4 - (t - butyl) - 1.1 - bis(t - butylperoxy)cyclohexane.

Ethylbenzene diluent was used in all the polymerizations at the level of 15-22% of the total feed solution, 0.2-0.4 Percent alpha-methylstryene dimer (chain transfer agent) and 0.3% mineral oil were also included in the feed solutions.

All product polymers contain 1% 2 - 6 - di - tert - butyl - 4 - methylphenol and 0.5% tris nonylphenyl phosphite antioxidants.

For the purpose of comparison, the first two runs in Table I used block copolymers outside the claimed range of composition (1st run) and molecular weight (2nd run). Both runs were unsatisfactory as the products had high absorbence of light. Electronmicroscopy showed that the polybutadiene domains of both products contain the "core and shell" structure. This structure consists of a polybutadiene shell of diameter larger than 100 nanometers and an occluded polystyrene core.

Example 3

In a manner generally similar to Example 1, a plurality of polymerizations were conducted utilizing a variety of block copolymers containing styrene and isoprene and some block copolymers of styrene with isoprene and butadiene copolymer blocks. The results are set forth in Table II, wherein the term "S/I" designates a styrene isoprene block copolymer; the heading "Comp" indicates the weight percent composition and under "M.W." the weight average molecular weight as determined by gel permeation chromatography. Under "Comments", the letters refer to footnotes indicating deviation from the procedure used in Example 1. All of the resultant polymers prepared indicated polydiene domains having the shapes of rods and spheres and less than about 50 nanometers in diameter with no visible occluded polystyrene. The stabilizers employed were either a mixture of 2,6 - di - (tert - butyl) - 4 - methylphenol with trisnonylphenyl phosphite as employed in Example 1; or (n - octadecyl - 3 - (4 - hydroxy - 3.5 - ditert - butylphenyl) - propionate), to provide a level of about 0.2 weight percent in the final product.

TABLE II

| Product comp. S/diene | Elastomer Type | Elastomer Comp. | Elastomer M.W. | n. Izod imp. kg/cm (Ft.-lbs./-in.-notch) | Tensile rupture kPa (psi) | Modulus kPa×$10^{-3}$ (psi) | Vicat H.D. (°C) | Absorbance (10 mils (0.254 mm) at 640 nm | MFR (sch. G) | Comments |
|---|---|---|---|---|---|---|---|---|---|---|
| 79/21 | S/I | 50/50 | 67,700 | 1.06 (0.20) | 9563 (1387) | 1999.49 (290,000) | — | 0.06 | 121.1 | A |
| 82/18 | S/I | 40/60 | 102,700 | 1.60 (0.30) | 11334 (1771) | 1585.80 (230,000) | — | 0.07 | 41.6 | A |
| 78/22 | S/I | 50/50 | 125,000 | 1.81 (0.34) | 6991 (1014) | 1241.06 (180,000) | 90 | 0.09 | 14.2 | B |
| 82/18 | S/I | 40/60 | 169,700 | 2.34 (0.44) | 17168 (2490) | 2206.34 (320,000) | 98.9 | 0.06 | 9.1 | B |
| 78/22 | S/I | 50/50 | 228,000 | 2.24 (0.42) | 16809 (2438) | 1785.75 (259,000) | 86.1 | 0.07 | 6.7 | B |
| 78/22 | S/I | 50/50 | 196,000 | 2.29 (0.43) | 14279 (2071) | 1806.44 (262,000) | 101.1 | 0.07 | 2.6 | C |
| 78/22 | S/I-B | 50/25—25 | 76,000 | 1.97 (0.37) | 17175 (2491) | 1751.28 (254,000) | 98.9 | 0.06 | 6.3 | B |
| 77/23 | Tapered S/I/S | 25/50/25 | 232,000 | 2.67 (0.50) | 14610 (2119) | 1392.75 (202,000) | 100 | 0.07 | 1.4 | C |
| 78/22[x)] | S/I/S | 7/86/7 | 180,000 | 8.22 (1.54) | 7680 (1114) | 1254.85 (182,000) | 93.9 | 0.13 | 2.4 | C |
| 82/18 | S/I-B | 40/15—45 | 90,000 | 2.29 (0.43) | 13203 (1915) | 1820.22 (264,000) | 96.1 | 0.10 | 0.4 | C |
| 79/21 | S/I/S | 17.5/65/17.5 | 147,300 | 1.86 (0.35) | 16292 (2363) | 1723.70 (250,000) | 97.2 | 0.09 | 6.1 | C |

A=Same additives and conditions as Example 1.
B=Same additives and conditions as Example 1 except no alphamethylstyrene dimer used.
C=Same conditions as Example 1 with the exception that no alphamethylstyrene used, and (n - octadecyl - 3 - (4 - hydroxy - 3,5 - di - tert - butylphenyl) - propionate) as stabilizer.
[x)]Comparative example, not according to the invention

In a manner similar to the foregoing example, other alkenyl aromatic monomers and mixtures thereof are readily employed to provide transparent impact resisting resins.

## Claims

1. An impact resistant alkenyl aromatic resinous composition in the form of a matrix of a polyalkenyl aromatic monomer having therein a block copolymer, said resinous composition being obtained by free radical polymerization of the alkenyl aromatic monomer in the presence of the block copolymer, the block copolymer having a weight average molecular weight of at least 40 000 and having the AB or AB-$(BA)_n$ configuration, wherein A represents a block of polymerized alkenyl aromatic monomer and B represents a block of polymerized conjugated diene monomer and n is an integer from 1 to 5, characterized in that,
   a) the composition is transparent and contains from 70 to 85 weight percent of alkenyl aromatic units and from 30 to 15 weight percent of conjugated diene units polymerized therein,
   b) the weight average molecular weight of the polyalkenyl aromatic monomer matrix lies in the range of from 75 000 to 350 000,
   c) the block copolymer is contained in the matrix as a plurality of domains in the form of rods and spheres having diameters less than 70 nanometers and no occlusions being observable by electron microscopy,
   d1) the block copolymer contains from 39 to 70 weight percent of polymerized alkenyl aromatic monomer and from 61 to 30 weight percent of polymerized butadiene therein or
   d2) the block copolymer contains from 35 to 50 weight percent of polymerized alkenyl aromatic monomer and from 65 to 50 weight percent of polymerized isoprene, which optionally can be partially replaced by butadiene, and
   e) when the block copolymer used is a copolymer comprising butadiene, the block copolymer having a weight average molecular weight from 40,000 to 150,000, crosslinking between the polymerized diene blocks has been prevented by addition of an antioxidant at or near the end of the polymerization.

2. A method for the preparation of an impact resistant alkenyl aromatic resinous composition by the free radical polymerisation of at least one alkenyl aromatic monomer in the presence of a block copolymer and forming a matrix of polyalkenyl aromatic monomer having therein the block copolymer having a weight average molecular weight of at least 40 000 and having the AB or $AB(BA)_n$ configuration, wherein A represents a block of polymerized alkenyl aromatic monomer and B represents a block of polymerized conjugated diene monomer and n is an integer from 1 to 5, characterized by forming a transparent composition containing from 70 to 85 weight percent of alkenyl aromatic unit and from 30 to 15, weight percent of conjugated diene units polymerized therein, providing a weight average molecular weight of the polyalkenyl aromatic monomer matrix of from 75 000 to 350 000 having therein the block copolymer as a plurality of domains in the form of rods and spheres having diameters less than 70 nanometers and no occlusions of polymerized alkenyl aromatic monomers being observable by electron microscopy and
   i) the block copolymer having a weight average molecular weight from 40,000 to 150,000, containing from 39 to 70 weight percent of polymerized alkenyl aromatic monomer and from 61 to 30 weight percent of polybutadiene therein or
   ii) the block copolymer contains from 35 to 50 weight percent of polymerized alkenyl aromatic monomer and from 65 to 50 weight percent of polymerized isoprene, which optionally can partially be replaced by butadiene, and when the block copolymer used is a copolymer comprising butadiene, preventing crosslinking between the polymerized diene blocks by adding an antioxidant at or near the end of the polymerisation.

## Patentansprüche

1. Schlagfeste alkenylaromatische Harzzusammensetzung in Form einer Matrix eines polyalkenylaromatischen Monomers mit einem darin enthaltenen Blockcopolymer, wobei diese Harzzusammensetzung durch freiradikalische Polymerisation des alkenylaromatischen Monomers in Gegenwart des Blockcopolymers erhalten wurde, das Blockcopolymer ein gewichtsmittleres Molekulargewicht von mindestens 40.000 und eine Konfiguration von AB oder $AB(BA)_n$ hat, in der A der Block aus polymerisiertem alkenylaromatischen Monomer und B der Block aus polymerisiertem konjugierten Dienmonomer und n eine ganze Zahl von 1-5 ist,
   **dadurch gekennzeichnet, daß**

a) die Zusammensetzung transparent ist und einpolymerisiert von 70-85 Gew.-% alkenylaromatische Einheiten und von 30-15 Gew.-% konjugierte Dieneinheiten enthält,

b) das gewichtsmittlere Molekulargewicht der polyalkenylaromatischen Monomermatrix im Bereich von 75.000 bis 350.000 liegt,

c) das Blockcopolymer in der Matrix als eine Vielzahl von Bereichen in Form von Stäbchen und Kugeln mit Durchmessern kleiner als 70 Nanometer enthalten ist und mit dem Elektronenmikroskop keine Einschlüsse sichtbar sind,

d1) das Blockcopolymer von 39-70 Gew.-% einpolymerisiertes alkenylaromatisches Monomer und von 61-30 Gew.-% einpolymerisiertes Butadien enthält oder

d2) das Blockcopolymer von 35-50 Gew.-% einpolymerisiertes alkenylaromatisches Monomer und von 65-50 Gew.-% einpolymerisiertes Isopren, das gegebenenfalls teilweise durch Butadien ersetzt sein kann, enthält und,

e) wenn das verwendete Blockcopolymer ein Copolymer ist, das Butadien enthält, wobei das Blockcopolymer ein gewichsmittleres Molekulargewicht von 40.000 bis 150.000 aufweist, dann wurde das Vernetzen zwischen den polymerisierten Dienblöcken durch Zusatz eines Antioxidans am Ende oder nahe des Endes der Polymerisation verhindert.

**2.** Verfahren zum Herstellen einer schlagfesten alkenylaromatischen Harzzusammensetzung durch freiradikalische Polymerisation mindestens eines alkenylaromtischen Monomers in Gegenwart eines Blockcopolymers und Ausbilden einer Matrix des polyalkenylaromatischen Monomers mit darin enthaltenem Blockcopolymer mit einem gewichtsmittleren Molekulargewicht von mindestens 40.000, das eine Konfiguration von AB oder $AB(BA)_n$ hat, in der A der Block aus polymerisiertem alkenylaromatischen Monomer und B der Block aus polymerisiertem konjugierten Dienmonomer und n eine ganze Zahl von 1-5 ist,

**gekennzeichnet durch**

Ausbilden einer transparenten Zusammensetzung enthaltend einpolymerisiert von 70-85 Gew.-% alkenylaromatische Einheiten und von 30-15 Gew.-% konjugierte Dieneinheiten, so daß ein gewichtsmittleres Molekulargewicht der polyalkenylaromatischen Matrix von 75.000 bis 350.000 entsteht, in der das Blockcopolymer als eine Vielzahl von Bereichen in Form von Stäbchen und Kugeln mit einem Durchmesser kleiner als 70 Nanometer enthalten ist und mit dem Elektronenmikroskop keine Einschlüsse von polymerisierten alkenylaromatischen Monomeren sichtbar sind und

( i) das Blockcopolymer ein gewichtsmittleres Molekulargewicht von 40.000 bis 150.000 hat, enthaltend von 39-70 Gew.-% einpolymerisiertes alkenylaromatisches Monomer und von 61-30 Gew.-% einpolymerisiertes Butadien, oder

(ii) das Blockcopolymer von 35-50 Gew.-% polymerisiertes alkenylaromatisches Monomer und von 65-50 Gew.-% polymerisiertes Isopren, das gegebenenfalls teilweise durch Butadien ersetzt sein kann, enthält, und, wenn das verwendete Blockcopolymer ein Copolymer ist, das Butadien enthält, Verhindern der Vernetzung zwischen den polymerisierten Dienblöcken durch Zugeben eines Antioxidans am Ende oder nahe des Endes der Polymerisation.

## Revendications

**1.** Composition résineuse, alcényl-aromatique, résistant aux chocs, sous la forme d'une matrice d'un polymère de monomère alcényl-aromatique dans laquelle il y a un copolymère séquencé, ladite composition résineuse étant obtenue par polymérisation radicalaire du monomère alcényl-aromatique en présence du copolymère séquencé, le copolymère séquencé ayant une masse moléculaire moyenne en poids d'au moins 40 000 et ayant la configuration AB ou $AB(BA)_n$ dans laquelle A représente une séquence de monomère alcényl-aromatique polymérisé et B représente une séquence de monomère diénique conjugué polymérisé, et n est un nombre entier valant de 1 à 5, caractérisée en ce que

a) la composition est transparente et contient de 70 à 85 pour-cent en poids de motifs alcényl-aromatique et de 30 à 15 pour-cent en poids de motifs diène conjugué qui y sont polymérisés,

b) la masse moléculaire moyenne en poids de la matrice du polymère de monomère alcényl-aromatique se situe dans l'intervalle allant de 75 000 à 350 000,

c) la matrice contient le copolymère séquencé à l'état de plusieurs domaines en forme de tiges et de sphères de diamètre inférieur à 70 nanomètres, aucune occlusion n'étant observable par microscopie électronique,

d1) le copolymère séquencé contient de 39 à 70 pour-cent en poids de monomère alcényl-aromatique polymérisé et de 61 à 30 pour-cent en poids de butadiène polymérisé, ou

d2) le copolymère séquencé contient de 35 à 50 pour-cent en poids de monomère alcényl-aromatique polymérisé et de 65 à 50 pour-cent en poids d'isoprène polymérisé, qui peut éventuellement être partiellement remplacé par du butadiène, et

e) lorsque le copolymère séquencé utilisé est un copolymère comprenant du butadiène et que ce copolymère séquencé présente une masse moléculaire moyenne en poids de 40 000 à 150 000, on empêche la réticulation entre les séquences de diène polymérisé, par, addition d'un antioxydant à la fin de la polymérisation ou à son approche.

**2.** Procédé de préparation d'une composition résineuse, alcényl-aromatique, résistant aux chocs, par polymérisation radicalaire d'au moins un monomère alcényl-aromatique en présence d'un copolymère séquencé, et formation d'une matrice d'un polymère de monomère alcényl-aromatique dans laquelle il y a un copolymère séquencé ayant une masse moléculaire moyenne en poids d'au moins 40 000 et ayant la configuration AB ou $AB(BA)_n$, dans laquelle A représente une séquence du monomère alcényl-aromatique polymérisé et B représente une séquence du monomère diène conjugué polymérisé, et n est un nombre entier valant de 1 à 5,

caractérisé par la formation d'une composition transparente contenant de 70 à 85 pour-cent en poids de motifs alcényl-aromatique et de 30 à 15 pour-cent en poids de motifs diène conjugué qui y sont polymérisés, en procurant une masse moléculaire moyenne en poids comprise entre 75 000 et 350 000 à la matrice de polymère d'un monomère alcényl-aromatique, dans laquelle le copolymère séquencé se trouve à l'état de plusieurs domaines en forme de tiges et de sphères de diamètre inférieur à 70 nanomètres, aucune occlusion de monomère alcényl-aromatique polymérisé n'étant observable par microscopie électronique, et

i) le copolymère séquencé ayant une masse moléculaire moyenne en poids de 40 000 à 150 000 contient de 39 à 70 pour-cent en poids de monomère alcényl-aromatique polymérisé et de 61 à 30 pour-cent en poids de polybutadiène, ou

ii) le copolymère séquencé contient de 35 à 50 pour-cent en poids de monomère alcényl-aromatique polymérisé et de 65 à 50 pour-cent en poids d'isoprène polymérisé, qui peut éventuellement être partiellement remplacé par du butadiène, et lorsque l'on utilise un copolymère séquencé comprenant du butadiène, on empêche la réticulation entre les séquences de diène polymérisé par addition d'un antioxydant à la fin de la polymérisation ou à son approche.